## Europäisches Patentamt

## European Patent Office

## Office européen des brevets

(19)

(11) Veröffentlichungsnummer: **0 189 789**
**B1**

(12)

# EUROPÄISCHE PATENTSCHRIFT

(45) Veröffentlichungstag der Patentschrift:
**07.12.88**

(51) Int. Cl.⁴: **A 01 C 7/10**

(21) Anmeldenummer: **86100545.2**

(22) Anmeldetag: **17.01.86**

(54) Kontrollsystem zur Überwachung einer mit einer Fahrgassenschaltung ausgerüsteten Sämaschine.

(30) Priorität: **23.01.85 DE 3502010**

(43) Veröffentlichungstag der Anmeldung:
**06.08.86 Patentblatt 86/32**

(45) Bekanntmachung des Hinweises auf die Patenterteilung:
**07.12.88 Patentblatt 88/49**

(84) Benannte Vertragsstaaten:
**AT DE FR GB NL**

(56) Entgegenhaltungen:
**AU-B- 8 465 075**
**DE-A- 2 105 786**
**DE-A- 2 505 369**
**DE-A- 2 815 873**
**DE-A- 2 817 779**
**GB-A- 2 133 556**

(73) Patentinhaber: **Amazonen-Werke H. Dreyer GmbH & Co. KG, Am Amazonenwerk 9-13, D-4507 Hasbergen-Gaste (DE)**

(72) Erfinder: **Grosse-Scharmann, Franz, Dr., Waldstrasse 35, D-2872 Hude i.O. (DE)**
Erfinder: **Gattermann, Bernd, Eichenwall 3, D-2872 Hude i.O. (DE)**
Erfinder: **Gehrke, Rudolf, Lerchenweg 4, D-2990 Papenburg 1 (DE)**

(74) Vertreter: **Patentanwälte Grünecker, Kinkeldey, Stockmair & Partner, Maximilianstrasse 58, D-8000 München 22 (DE)**

ACTORUM AG

# Beschreibung

Die Erfindung betrifft ein Kontrollsystem zur Überwachung einer mit einer Fahrgassenschaltung ausgerüstete Sämaschine gemäss des Oberbegriffes des Anspruches 1.

Eine mit einem derartigen Kontrollsystem ausgerüstete Sämaschine ist bereits durch die DE-OS 2817779 bekannt. Bei dieser Maschine wird die Saatgutzufuhr beim Anlegen von Fahrgassen in periodischer Wiederkehr zu bestimmten Fahrgassensäscharen durch Schliessen der an den Auslauföffnungen angeordneten Schieber unterbrochen. Die Betätigung der den Fahrgassensäscharen zugeordneten Schieber erfolgt über einen elektrischen Linear-Motor, dessen Steuerung über eine in einem Elektronikkasten angeordnete Zählerdekade eofolgt. In diesem Elektronikkasten ist des weiteren auch ein Kipprelais für den Empfang des Austrittssignals der Zählerdekade und für die Übertragung des Steuerstromes für den elektrischen Motor angeordnet, der mit den Schiebern zum Schliessen der Auslauföffnungen verbunden ist. Das von dem Kipprelais empfangene Austrittssignal der Zählerdekade wird mit Hilfe von zwei Kontrolleuchten zur Anzeige gebracht, wobei eine Kontrolleuchte bei geöffneter Schieberstellung und die andere bei geschlossener Schieberstellung aufleuchtet. Dieses Kontrollsystem stellt nur eine sehr unbefriedigende Überwachung der Fahrgassenschaltung dar, da sich die Informationen der Überwachungseinrichtung lediglich auf die Austrittssignale der Zählerdekade zur Steuerung des elektrischen Motors für die Schieberbetätigung beschränkt. Der Saatgutfluss bzw. den Saatgutfluss beeinflussende Bauteile bleiben unberücksichtigt, und ein Klemmen des Schiebers bleibt unbemerkt. Der Schlepperfahrer muss sich mit den Informationen der Signale zur Schieberbetätigung begnügen, hat aber keine weiteren Möglichkeiten zur Überwachung der Fahrgassenschaltung, d. h., Informationen, ob zur richtigen Zeit kein bzw. Material ausgebracht wird, fehlen. Bei einem Kontrollsystem zur Überwachung einer mit einer Fahrgassenschaltung ausgerüsteten Sämaschine sind aber gerade diese Informationen, die Rückschlüsse auf die Funktionsfähigkeit der Fahrgassenschaltung schliessen lassen, für den Landwirt von besonderer Wichtigkeit und daher unerlässlich.

Der Erfindung liegt daher die Aufgabe zugrunde, die Kontrolle des Ausbringens von Saatgut einer mit einer Fahrgassenschaltung ausgerüsteten Sämaschine erheblich zu verbessern, wobei gleichzeitig das Verstehen der angezeigten Informationen erleichtert wird.

Diese Aufgabe wird erfindungsgemäss durch das Kennzeichen des Anspruches 1 gelöst. Infolge dieser Massnahme wird entweder die Schieberstellung, die Drehung bzw. das Stillstehen der Fahrgassensäräder oder direkt der Saatfluss bzw. Nichtsaatfluss zu den Fahrgassensäscharen von den Sensoren erfasst. Es werden somit direkt von den den Saatfluss zu den Fahrgassensäscharen unterbrechenden Bauteilen der Sämaschine bzw.

dem Saatfluss selbst und nicht von den Schaltgliedern dieser Bauteile die Anzeigesignale erzeugt. Somit ergibt sich eine direkte Anzeige des Saatflusses, wobei alle möglichen Störeinflüsse ausgeschlossen sind. Somit kann der Landwirt den Saatfluss zu den Fahrgassensäscharen seiner mit einer Fahrgassenschaltung ausgerüsteten Sämaschine in besonders vorteilhafter Weise überwachen und alle tatsächlich auftretenden Störungen sofort erkennen und beseitigen. Die Kontrolle des Ausbringens von Saatgut an den Fahrgassensäscharen ermöglicht eine Überwachung der Funktionsfähigkeit einer mit einer Fahrgassenschaltung ausgerüsteten Sämaschine und trägt somit in besonders vorteilhafter Weise zum Anlegen eines fehlerfreien Fahrgassensystems bei.

Weiterhin wird durch die erfindungsgemässe Ausgestaltung der Schaltung dem Benutzer ein automatisch arbeitendes Kontrollsystem zur Überwachung einer mit einer Fahrgassenschaltung ausgerüsteten Sämaschine angeboten, was den Schlepperfahrer in besonders bevorzugter Weise entlastet, der sich somit auf andere Aufgaben konzentrieren kann. Weiterhin führt die Verknüpfung der Fahrgassenschaltung in der Weise, dass wenn die Saatgutzufuhr zu den Fahrgassensäscharen unterbrochen ist, die Schaltvorrichtung bei ausgeschalteter Fahrgasseneinrichtung eine Fehleranzeige auslöst und bei eingeschalteter Fahrgasseneinrichtung keine Fehleranzeige auslöst zu einer wesentlichen Entlastung des Schlepperfahrers.

Eine mit einer Aussaatkontrolle ausgerüstete Sämaschine ist bereits durch die DE-OS 2815873 bekannt. Bei dieser Sämaschine sind hier als Kornausfallfühler bezeichnete Sensoren im Bereich der Scharausläufe aller Säschare angeordnet. Fördert ein Säschar aus irgendeinem Grund kein Saatgut, kommt es zu einer Fehlermeldung, die zur Anzeige gebracht wird. Der Schlepperfahrer beseitigt die zur Fehlermeldung geführte Ursache und setzt das Ausbringen des Saatgutes fort. Diese nach der DE-OS 2815873 bekannte Sämaschine weist jedoch keine Fahrgassenschaltung auf. Es wäre jedoch auch denkbar, eine mit diesen Kornausfallfühlern ausgebildete Sämaschine mit einer Fahrgassenschaltung auszurüsten. Beim Anlegen einer Fahrgasse würde es dann jedoch zu einer Fehlermeldung durch die in den Fahrgassensäscharen angeordneten Kornausfallfühler kommen. Der Benutzer muss also zwischen zwei grundsätzlichen Fehlermeldungen unterscheiden, wobei es sich bei der durch das Anlegen von Fahrgassensäscharen hervorgerufenen Fehlermeldung um keine «richtige» Fehlermeldung handelt, denn wenn eine Fahrgasse angelegt würde, würde diese Schaltung «Fehler» melden.

Weiterhin ist durch die DE-AS 2105786 ein Kontrollsystem für eine Einzelkornsämaschine bekannt. Dieses Kontrollsystem weist zur Überwachung und Anzeige der eingestellten Saatgutzufuhr Sensoren auf, die für den Saatfluss zu den Säscharen repräsentierende Signale an eine Schaltung des Kontrollsystems übermitteln. Auch meldet dieses Kontrollsystem dem Fahrer für die gesamte Scharanordnung «Fehler», wenn bei irgendeinem der Schare die vorgewählte Funktion nicht gewährleistet ist unter gleichzeitiger Anzeige, um welches Schar es sich handelt. Dieses Kontrollsystem überwacht die vorgegebene Saatdichte bzw. die Anzahl der von dem Dosiersystem ausgebrachten Körner pro zurückgelegtem Weg und vergleicht die tatsächlich gemessenen Werte mit der vorgegebenen Saatdichte. Weicht die tatsächliche Saatdichte von der vorgegebenen Saatdichte ab, so meldet dieses Kontrollsystem «Fehler», unter gleichzeitiger Anzeige des Schares, bei dem der «Fehler» aufgetreten ist.

Es wäre nun denkbar, dieses bekannte Kontrollsystem bei einer Sämaschine gemäss der DE-OS 28 17 779 anzuordnen, welche eine Fahrgassenschaltung aufweist. Jetzt würden jedoch genau die gleichen Nachteile auftreten, die im Zusammenhang mit der DE-OS 28 15 873 geschildert wurden. Auch hier müsste der Fahrer zwischen zwei grundsätzlichen Fehlermeldungen unterscheiden, wobei es sich bei der durch das Anlegen von Fahrgassen hervorgerufenen Fehlermeldung um keine «richtige» Fehlermeldung handelt, denn wenn eine Fahrgasse angelegt würde, würde diese Schaltung «Fehler» melden, da den Fahrgassensäscharen kein Saatgut zugeleitet wird, so dass nicht die vorgegebene Saatdichte entsprechend der Schaltung gemäss der DE-AS 21 05 786 ausgebracht wird. Die Ausführung der Erfindung sieht weiter vor, dass die von den Sensoren erzeugten repräsentativen Signale in einer Schaltung verarbeitet werden und dass diese Schaltung Anzeigesignale erzeugt, die mit einem Anzeigeelement dargestellt werden. Die Darstellung der von der Schaltung erzeugten Anzeigesignale durch das Anzeigeelement informieren den Schlepperfahrer jederzeit über den Saatfluss zu den Fahrgassensäscharen; d. h. über die Funktionsfähigkeit seiner mit einer Fahrgassenschaltung ausgerüsteten Sämaschine.

Bei der Ausbildung der Sämaschine in erfindungsgemässer Weise ist vorgesehen, dass die Sensoren zum Erfassen des Saatflusses sowohl in dem Bereich der Saatleitungen, wie auch in den Säscharen anzuordnen sind. Die Sämaschine ist derart in erfindungsgemässer Weise ausgerüstet, dass allen Säscharen, aber zumindest einem Fahrgassensäschar ein Sensor zugeordnet ist. Die Anordnung dieser Sensoren, welche für den Saatfluss zu den Säscharen repräsentative Signale an eine Schaltung des Kontrollsystems übermitteln, soll sich nicht nur auf die bereits erwähnte Sensoranordnung beschränken, denn die Sensoren lassen sich an weiteren Stellen der Sämaschine plazieren. So lassen sich die Sensoren beispielsweise an die Vorgelegewelle, über welche das Saatgut in die Fahrgassensäschare fördernden Dosierorgane angetrieben werden oder direkt an die Dosierorgane der Fahrgassensäschare anordnen. Erfasst wird die Drehung der Vorgelegewelle bzw. der Dosierorgane. Bei einem Stillstand dieser Aggregate wird kein Saatgut gefördert, und die Fahrgassensensoren melden «kein Saatfluss» an die Schaltung des Kontrollsystems. Des weiteren lassen sich die Fahrgassensensoren beispielsweise an den Schiebern zur Saatgutzufuhrunterbrechung einer Sämaschine zum Erfassen der jeweiligen Schieberstellung anordnen. Beispielsweise bei einer pneumatisch arbeitenden Sämaschine lassen sich die erfindungsgemässen Fahrgassensensoren an den Abschaltklappen der jeweiligen Särohre zu den Fahrgassensäscharen anordnen, wobei die Sensoren Informationen über die jeweilige Stellung der Abschaltklappen liefern.

Bei diesen Sensoren kann es sich um Sensoren handeln, die beispielsweise auf akustischer, piezoelektrischer oder optischer Basis arbeiten oder als Mikrophon ausgebildet sind.

In einer besonders bevorzugten Ausführungsform ist erfindungsgemäss vorgesehen, dass jeweils zumindest einem Fahrgassensäschar und einem Nichtfahrgassensäschar ein Sensor zugeordnet ist. Infolge dieser Massnahme werden die von den jeweiligen Sensoren erzeugten Signale in erfindungsgemässer Weise der Schaltung zugeführt und in entsprechender Weise verarbeitet und verglichen. Dieser Vergleich der von den Sensoren der Fahrgassensäschare bzw. Nichtfahrgassensäschare erzeugten Signale ermöglicht eine korrekte Interpretation der von den Fahrgassensensoren erzeugten Signale, so dass bei Verknüpfung der Schaltung bzw. der Sensoren mit der Fahrgassenschaltung bei eingeschalteter Fahrgasseneinrichtung, wenn die Saatgutzufuhr zu den Fahrgassensäscharen unterbrochen ist, die Schaltvorrichtung keine Fehleranzeige auslöst.

Weitere Einzelheiten der Erfindung sind der Beispielsbeschreibung und den Zeichnungen zu entnehmen. Hierbei zeigen

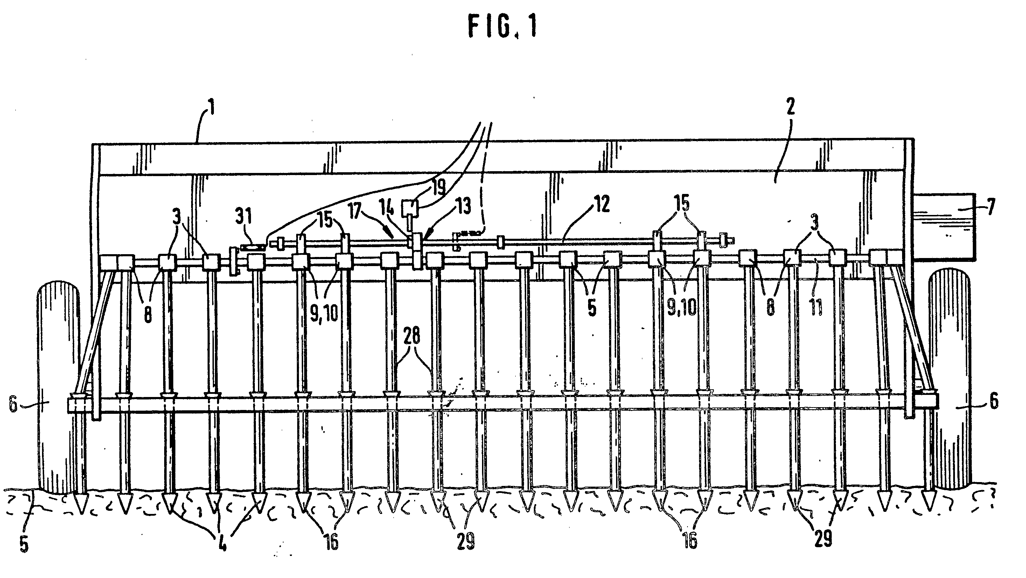

Fig. 1 eine mit einer Fahrgassenschaltung ausgerüstete Sämaschine in der Ansicht von hinten,

Fig. 2 eine schematische Darstellung einer mit einem erfindungsgemässen Kontrollsystem ausgerüsteten Sämaschine und

Fig. 3 das Blockschaltbild eines erfingunsgemässen Kontrollsystems.

Die Sämaschine 1 weist den Vorratsbehälter 2 auf, aus dem das Saatgut durch in dem Vorratsbehälter 2 befindliche Auslauföffnungen mit Hilfe der Dosierorgane 3 über die Säschare 4 in dosierbaren Mengen in den Boden 5 eingebracht wird. Während des Betriebes stützt sich die Sämaschine 1 über die Laufräder 6 auf dem Boden 5 ab. Von dem Laufrad 6 aus werden über das einstellbare Regelgetriebe 7 die Dosierräder 8 der Dosierorgane 3 angetrieben. Einzelne Dosierräder 8 sind als Saatgutzufuhrunterbrechungselemente 9 ausgebildet. Diese als Saatgutzufuhrunterbrechungselemente 9 ausgebildeten Dosierräder 10 sind frei drehbar auf der Säwelle 11, die von dem Regelgetriebe 7 angetrieben wird, gelagert. Parallel zu der Säwelle 11 ist an dem Vorratsbehälter 2, oberhalb der Dosierräder 10, die Vorgelegewelle 12 gelagert. Diese Vorgelegewelle 12 ist über den Zahnradtrieb 13, der die Schlingfederkupplung 14 aufweist, drehmomentübertragbar mit der Säwelle 11 verbunden. Weiterhin sind auf der Vorgelegewelle 12 die Zahnräder 15 drehfest angeordnet, deren Verzahnung in die Verzahnung der frei drehbar auf der Säwelle 11 angeordneten Dosierräder 10 eingreift. Somit werden die Dosierräder 10 über die Vorgelegewelle 12 angetrieben, wenn die Schlingfederkupplung 14 eingeschaltet ist. Die Dosierräder 10 sind jeweils den Fahrgassensäscharen 16 zugeordnet, die in dem Bereich der von Saatgut freizuhaltenden Spuren, die die Fahrgassen für die nachfolgende Arbeitsmaschine ergeben, angeordnet sind, und die Saatgutzufuhr in periodischer Wiederkehr zu den Fahrgassensäscharen 16 unterbrechen. Die Vorrichtung zum Anlegen solcher Fahrgassen wird als Fahrgassenschaltung 17 bezeichnet.

An der Sämaschine 1 ist die Schaltvorrichtung 18 angeordnet, die mittels des Schaltelementes 19, das als Hubelement ausgebildet ist, die Schlingfederkupplung 14 betätigt. An der Sämaschine 1 sind die Dosierräder 10, die die Saatgutzufuhrunterbrechungselemente 9 bei der Unterbrechung ihres Antriebes über die Schlingfederkupplung 14 durch den Hubmagneten 19 bildet, für zwei freizuhaltende Streifen angeordnet.

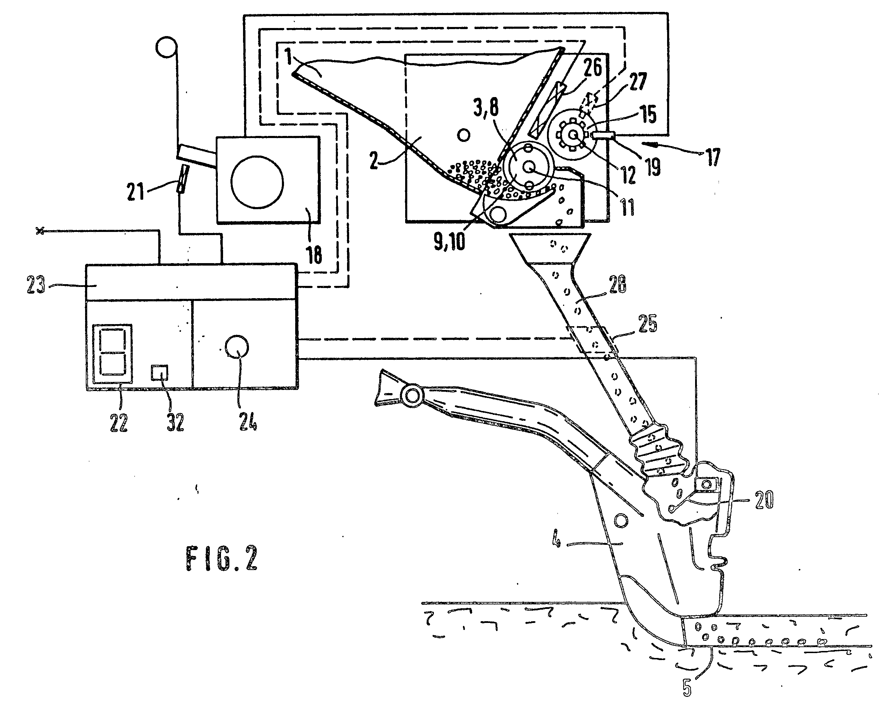

Die Fig. 2 zeigt in schematischer Darstellung ein Kontrollsystem zur Überwachung der mit der Fahrgassenschaltung 17 ausgerüsteten Sämaschine 1. Dieses Kontrollsystem weist die Sensoren 20 und 21 auf. Der Sensor 20 ist beispielsweise direkt im Fahrgassensäschar 16 angeordnet und liefert für den Saatfluss zu diesem Säschar 16 repräsentative Signale, die an eine Schaltung, die wiederum in der als Anzeigeelement 22 ausgebildeten Saatkontrolle 23 angeordnet ist, übermittelt werden. Die Spannungsversorgung dieser Saatkontrolle 23 erfolgt über die Elektroanlage des die Sämaschine 1 ziehenden Schleppers. Der Sensor 21 ist im Bereich der Schaltvorrichtung 18 der Fahrgassenschaltung 17 angeordnet und übermittelt die der jeweiligen Stellung der Fahrgassenschaltung 17 entsprechenden Signale an die Schaltung der Saatkontrolle 23. Die von den Sensoren 20 und 21 erzeugten Signale werden in der Schaltung der Saatkontrolle 23 verarbeitet und Anzeigesignale umgeformt und mit dem Anzeigeelement 22 dargestellt. Diese Schaltung bzw. die Sensoren 20 und 21 sind derart mit der Fahrgassenschaltung 16 verknüpft, dass beim Anlegen von Fahrgassen, wobei die Saatgutzufuhr in periodischer Wiederkehr zu den Fahrgassensäscharen 16 unterbrochen wird, bei der von Sensor 21 gemeldeten Stellung «Fahrgasse» der Fahrgassenschaltung 17, die Schaltung derart geschaltet ist, dass die Signale der Fahrgassensensoren 20 «kein Saatgut» als korrekt interpretieren. Kommt es nun einmal vor, dass die von den Sensoren 20 und 21 erzeugten Signale voneinander abweichen, führt dies zu einer Fehlermeldung, die über die Anzeige 24 der Saatkontrolle 23 kenntlich gemacht wird.

Es wird dem Landwirt hierdurch angezeigt, dass beim Anlegen einer Fahrgasse fälschlicherweise Saatgut durch die Fahrgassensäschare 16 ausgebracht wird, oder dass bei dem normalen Säen, wenn momentan keine Fahrgasse angelegt werden soll, den Fahrgassensäscharen 16 kein Saatgut zugeführt und somit eine Fahrgasse angelegt wird. Der Landwirt kann beim Anzeigen dieses Signals, welches beispielsweise optisch und akustisch unterstützt sein kann, sofort das Säen unterbrechen und den Fehler feststellen und beseitigen, um dann anschliessend das Säen in korrekter Weise weiterzuführen. Bei diesem Fehler kann es sich beispielsweise um ein Klemmen des Schiebers, ein Klemmen der Kupplung zwischen Särad und Säwelle, einen Fehler bzw. Stromausfall in den Übertragungselementen, einen Schaden an den Betätigungselementen für die Unterbrechung des Saatgutes zu den Fahrgassensäscharen oder zu Unterbrechungselementen selbst usw., handeln.

Die Anordnung der Sensoren zum Erfassen der jeweilig zum Überwachen einer mit einer Fahrgassenschaltung 17 ausgerüsteten Sämaschine 1 benötigten Informationen, soll sich nicht nur auf die beschriebenen Sensoren in den Fahrgassensäscharen beschränken. Die Fig. 2 zeigt weitere, mit strichpunktierten Linien angedeutete Sensoren 25, 26 und 27, wobei der Sensor 25 beispielsweise im Bereich der Saatleitung 28 angeordnet ist und dem Saatfluss zu den Fahrgassensäscharen 16 repräsentative Signale liefert. Des weiteren besteht die Möglichkeit, die Drehbewegung der Dosierräder 10 zu erfassen. Hierzu werden die Sensoren 26 an den als Saatgutzufuhrunterbrechungselementen 9 ausgebildeten Dosierrädern 10 angeordnet und liefern die Signale «Dosierräder 10 drehen sich» oder «Dosierräder 10 stehen still», weil ein Drehen der Dosierräder 10 Saatgutförderung und ein Stillstehen der Dosierräder 10 keine Saatgutförderung bedeuten. Die Erfassung der Drehbewegung der Vorgelegewelle 12 durch den Sensor 27 bietet eine weitere Möglichkeit zum Erzeugen von für den Saatfluss zu den Fahrgassensäscharen 16 repräsentativen Signalen.

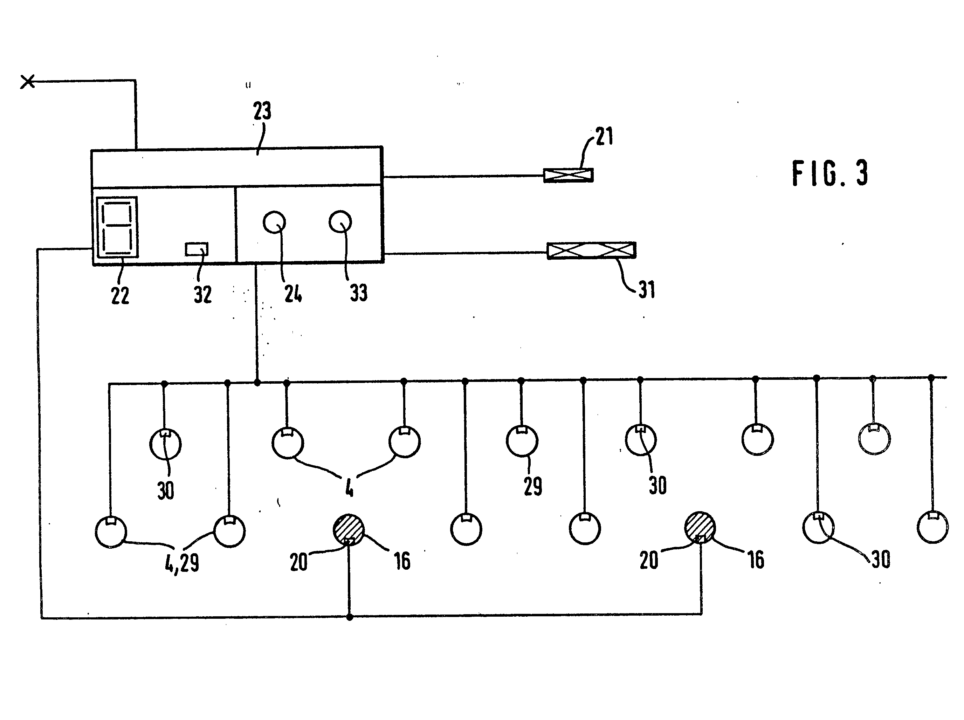

Im folgenden wird ein weiteres Kontrollsystem zur Überwachung einer mit einer Fahrgassenschaltung 17 ausgerüsteten Sämaschine 1 anhand der Fig. 3 erläutert:

Die Fig. 3 zeigt das Kontrollsystem in Form eines Blockschaltbildes, bei dem es sich beispielsweise um eine Sämaschine mit zweireihiger Scharanordnung handelt. Dieses Kontrollsystem weist sowohl an den Fahrgassensäscharen 16 als auch an den Fahrgassensäscharen 29 angeordnete Sensoren 20 und 30 zum Erfassen des jeweiligen Saatflusses auf, wobei die Fahrgassensäschare 16 und Nichtfahrgassensäschare 29 derart verknüpft sind, dass die in den Fahrgassensäscharen 16 angeordneten Sensoren 20 separat in Reihe und die in den Nichtfahrgassensäscharen 29 angeordneten Sensoren 30 ebenfalls separat in Reihe geschaltet sind. Die von diesen Sensoren 20 und 30 erzeugten Signale werden an die Schaltung der Saatkontrolle 23 übermittelt und in entsprechender Weise verarbeitet. Dieses erfindungsgemässe Kontrollsystem verbessert die Kontrolle des Ausbringens des Saatgutes einer mit einer Fahrgassenschaltung 17 ausgerüsteten Sämaschine 1 in erheblichem Masse und liefert dem Benutzer alle zur Überwachung notwendigen Informationen.

Im folgenden wird die erfindungsgemässe Funktionsweise der Sensoren in Verbindung mit der Fahrgassenschaltung beschrieben:

Zu Beginn der Säarbeit stellt der Landwirt an dem Schaltkopf der Schaltvorrichtung 18 die entsprechende Anfangsstellung der Fahrgassenschaltung ein. Über den Korrekturkopf 32 der Saatkontrolle 23 wird die entsprechende Stellung des Schaltkopfes der Fahrgassenschaltung eingegeben. Angenommen bei den ersten beiden Überfahrten über das zu bestellende Feld soll keine Fahrgasse angelegt werden. Bei diesen beiden Überfahrten melden alle Sensoren 20 und 30, die den Fahrgassensäscharen 16 und den Nichtfahrgassensäscharen 29 zugeordnet sind, «Saatfluss». Bei der dritten Überfahrt soll nun in gewünschter Weise eine Fahrgasse angelegt werden. Durch das jeweilige Weiterschalten des Schaltkopfes am Feldende, hat auch die Schaltung der Saatkontrolle 23 weitergezählt und der Schaltkopf betätigt in dieser Stellung «Fahrgasse» den Hubmagneten 19, so dass die Saatgutzufuhr zu den Fahrgassensäscharen 16 unterbrochen wird. Der Sensor 21 erkennt jetzt die Stellung «Fahrgasse» und die Fahrgassensensoren 20 melden «kein Saatfluss». Diese Informationen werden an die Schaltung der Saatkontrolle 23 weitergeleitet. Die Schaltung ist derart mit der Fahrgassenschaltung verknüpft, dass es zu keiner Fehlermeldung kommt, wenn die Sensoren 20 und 21 die Signale «kein Saatfluss» und «Fahrgasse» an die Schaltung liefern und als korrekt interpretieren. Am Feldende wird der Schaltkopf der Fahrgassenschaltung weitergeschaltet und der Hubmagnet 19 derart betätigt, so dass die Saatgutzufuhr zu den Fahrgassensäscharen 16 wieder hergestellt ist. Während der nächsten vier Überfahrten über das zu bestellende Feld soll keine Fahrgasse angelegt werden. Alle Sensoren 20 und 30 der Fahrgassensäschare 16 und Nichtfahrgassensäschare 29 müssen während der nächsten vier Überfahrten «Saatfluss» melden. Meldet jetzt plötzlich, während dieser vier Überfahrten einer der Sensoren 20 oder 30 «kein Saatfluss» oder der Sensor 21 erkennt plötzlich die Stellung «Fahrgasse», während die Sensoren 20 «Saatfluss» der Fahrgassensäschare 16 melden, kommt es zu einer Fehlermeldung, die über die Anzeige 24 der Saatkontrolle 23 kenntlich gemacht wird. Der Schlepperfahrer stoppt die Säarbeit und geht der Ursache für die Fehlermeldung nach, behebt diese zur Fehlermeldung geführte Ursache und setzt die Säarbeit fort. Nach den vier Überfahrten, bei denen keine Fahrgassen angelegt werden, kommt es jetzt in bereits beschriebener Weise zum Anlegen einer Fahrgasse, wobei sich dieser Vorgang jetzt in periodischer Wiederkehr wiederholt.

Zur Entlastung des Schlepperfahrers, der die zu einer Fehlermeldung geführte Ursache zuerst herausfinden muss, lässt sich eine weitere Anzeige 33 neben der Anzeige 24 der Saatkontrolle 23 anordnen, so dass die Anzeige 24 beispielsweise der Fahrgassenschaltung 17, d. h. den Sensoren 20 und 21, die den Fahrgassensäscharen 16 und dem Schaltkopf der Schaltvorrichtung 18 zugeordnet sind, zugeordnet ist. Die Anzeige 33 lässt sich beispielsweise den Nichtfahrgassensäscharen 29 zuordnen, so dass der Schlepperfahrer bei einer Fehlermeldung sofort erkennt, ob die Ursache dieser Fehlermeldung der Fahrgassenschaltung 17 oder den Nichtfahrgassensäscharen 29 zuzuordnen ist.

**Patentansprüche**

1. Kontrollsystem zur Überwachung einer mit einer Fahrgasseneinrichtung (17), die die Saatgutzufuhr in periodischer Wiederkehr zu bestimmten Fahrgassensäscharen (16) unterbricht, ausgerüsteten Sämaschine, wobei das Kontrollsystem eine Schaltvorrichtung (18) aufweist, die die Fahrgasseneinrichtung (17) ein- und ausschaltet und die Einschalt- und Ausschaltstellung der Fahrgasseneinrichtung anzeigt, dadurch gekennzeichnet, dass das Kontrollsystem Sensoren (20, 21, 25, 26, 27, 30, 31) aufweist, die dem Saatfluss zu den Fahrgassensäscharen (16) entsprechende Signale erzeugen und an die Schaltvorrichtung (18) übermitteln und dass, wenn die Saatgutzufuhr zu den Fahrgassensäscharen (16) unterbrochen ist, die Schaltvorrichtung (18) bei ausgeschalteter Fahrgasseneinrichtung eine Fehleranzeige auslöst und bei eingeschalteter Fahrgasseneinrichtung keine Fehleranzeige auslöst.

2. Kontrollsystem nach Anspruch 1, dadurch gekennzeichnet, dass die von den Sensoren (20, 21, 25, 26, 27, 30, 31) erzeugten repräsentativen Signale in einer Schaltung verarbeitet werden, und dass diese Schaltung Anzeigesignale erzeugt, die mit einem Anzeigeelement (22) dargestellt werden.

3. Kontrollsystem nach einem der vorstehenden Ansprüche, dadurch gekennzeichnet, dass die Sensoren (20, 30) in den Säscharen (16, 29) angeordnet sind.

4. Kontrollsystem nach einem der Ansprüche 1 bis 3, dadurch gekennzeichnet, dass die Sensoren (20, 30) in dem Bereich der Saatleitungen (28) angeordnet sind.

5. Kontrollsystem nach einem der Ansprüche 1 bis 3, dadurch gekennzeichnet, dass zumindest einem Fahrgassensäschar (16) eine Sensor (20, 25, 26) zugeordnet ist.

6. Kontrollsystem nach einem der Ansprüche 1 bis 3, dadurch gekennzeichnet, dass jeweils zumindest einem Fahrgassensäschar (16) und einem Nichtfahrgassensäschar (29) ein Sensor zugeordnet ist.

7. Kontrollsystem nach einem der Ansprüche 1 bis 3, dadurch gekennzeichnet, dass allen Säscharen (16, 29) ein Sensor (20, 30) zugeordnet ist.

**Claims**

1. Control system for monitoring a seed drill provided with a tramline arrangement (17), which interrupts the supply of seed to predetermined tramline sowing coulters (16) at periodic intervals, the control system having a switching device (18) which switches the tramline arrangement (17) on and off and indicates the switched-on and switched-off positions of the tramline arrangement, characterised in that the control system has sensors (20, 21, 25, 26, 27, 30, 31) which produce signals, corresponding to the flow of seed to the tramline sowing coulters (16), and transmit the signals to the switching device (18), and in that, when the supply of seed to the tramline sowing coulters (16) is interrupted, the switching device (18) indicates a fault in the event of the tramline arrangement being switched-off and does not indicate a fault in the event of the tramline arrangement being switched-on.

2. Control system according to claim 1, characterised in that the representative signals produced by the sensors (20, 21, 25, 26, 27, 30, 31) are processed in a circuit, and in that this circuit produces indicator signals which are represented by an indicator means (22).

3. Control system according to any of the preceding claims, characterised in that the sensors (20, 30) are disposed in the sowing coulters (16, 29).

4. Control system according to any of claims 1 to 3, characterised in that the sensors (20, 30) are disposed in the region of the seed lines (28).

5. control system according to any of claims 1 to 3, characterised in that a sensor (20, 25, 26) is associated with at least one tramline sowing coulter (16).

6. Control system according to any of claims 1 to 3, characterised in that a sensor is associated with at least one tramline sowing coulter (16) and at least one non-tramline sowing coulter (29).

7. Control system according to any of claims 1 to 3, characterised in that a sensor (20, 30) is associated with all of the sowing coulters (16, 29).

**Revendications**

1. Système de commande pour surveiller un semoir équipé d'un dispositif de commutation de chemins de passage (17) qui coupe l'alimentation en semence vers certains socs de semoir (16) associés aux chemins de passage suivant une répétition périodique, ce dispositif de commande comportant un dispositif de commutation (18) qui met en œuvre ou coupe le dispositif de chemins de passage (17) et affiche la position de mise en œuvre ou la position de mise au repos de dispositif de chemins de passage, système caractérisé en ce qu'il comporte des capteurs (20, 21, 25, 26, 27, 30, 31) qui génèrent des signaux interrompant le flux de semence vers les socs de semoir (16) associés aux chemins de passage et transmettent ces signaux au dispositif de commutation (18) et en ce que lorsque l'alimentation en semence des socs de semoir (16) associés aux chemins de passage est interrompue, le dispositif de commutation (18) déclenche un signal d'affichage d'erreur si le dispositif de chemins de passage est coupé et lorsque le dispositif de chemins de passage est mis en œuvre, il ne déclenche pas de signal d'erreur.

2. Système de commande selon la revendication 1, caractérisé en ce que les signaux représentatifs fournis par les capteurs (20, 21, 25, 26, 27, 30, 31) sont traités dans un circuit et en ce que ce circuit génère des signaux d'affichage qui sont fournis par un élément d'affichage (22).

3. Système de commande selon l'une des revendications précédentes, caractérisé en ce que les capteurs (20, 30) sont associés aux socs de semoir (16, 29).

4. Système de commande selon l'une des revendications 1 à 3, caractérisé en ce que les capteurs (20, 30) sont prévus au niveau des conduites de semence (28).

5. Système de commande selon l'une des revendications 1 à 3, caractérisé par un capteur (20, 25, 26) associé à au moins un soc de semoir de chemins de passage (16).

6. Système de commande selon l'une des revendications 1 à 3, caractérisé en ce qu'un capteur est associé à au moins un soc de semoir (16) associé à un chemin de passage et à au moins un soc de semoir (29) non associé à un chemin de passage.

7. Système de commande selon l'une des revendications 1 à 3, caractérisé par un capteur (20, 30) associé à tous les socs de semoir (16, 29).

# FIG.1

EP 0189789 B1

FIG.2

FIG. 3